Europäisches Patentamt

European Patent Office

Office européen des brevets

(19)

(11) EP 0 729 116 A1

(12) ## DEMANDE DE BREVET EUROPEEN

(43) Date de publication:
28.08.1996 Bulletin 1996/35

(51) Int Cl.⁶: **G06T 5/00**

(21) Numéro de dépôt: 96400336.2

(22) Date de dépôt: 19.02.1996

(84) Etats contractants désignés:
BE CH DE ES GB IT LI NL SE

(30) Priorité: 23.02.1995 FR 9502099

(71) Demandeur: AEROSPATIALE SOCIETE
NATIONALE INDUSTRIELLE
F-75016 Paris (FR)

(72) Inventeur: Canaud, Jean-Louis
78114 Magny-les-Hameaux (FR)

(74) Mandataire: Bonnetat, Christian
CABINET BONNETAT
23, Rue de St. Pétersbourg
75008 Paris (FR)

(54) **Procédé et dispositif de segmentation d'une image**

(57) -La présente invention concerne un procédé et un dispositif pour segmenter une image représentant une scène déterminée.

- Selon l'invention, ledit dispositif (1) comporte :

  . une première unité de calcul (2) déterminant des classes d'objets présents sur ladite scène et des directions privilégiées associées auxdites classes ; et

  . une seconde unité de calcul (3) munie de calculateurs (7, 8, 9) destinés à effectuer sur l'image des opérations de segmentation associées auxdites classes suivant lesdites directions privilégiées, lesdites opérations de segmentation étant destinées à former des primitives constituées de segments de droite attenants le long d'objets de l'image.

FIG.1

EP 0 729 116 A1

**Description**

La présente invention concerne un procédé de segmentation d'une image, ainsi qu'un dispositif pour la mise en oeuvre dudit procédé.

Dans le cadre de la présente invention, on entend par segmentation la recherche de lignes caractéristiques sur l'image et la formation de primitives le long des lignes caractéristiques déterminées lors de ladite recherche, lesdites primitives étant constituées de segments de droite attenants.

On sait qu'une image brute non transformée, engendrée par exemple par un dispositif de prise de vue à infrarouge ou par un radar, est généralement inadaptée à de nombreux traitements et en particulier aux traitements auxquels elle est initialement destinée, puisqu'elle présente un nombre trop important d'informations pouvant être difficilement traitées simultanément.

En revanche, de tels traitements d'images peuvent généralement être mis en oeuvre sur une image segmentée qui est donc ramenée à des éléments caractéristiques précisément définis. Une telle image segmentée peut en particulier être comparée à une seconde image représentant la même scène et également segmentée, par exemple pour mettre en correspondance ces deux images, en particulier au moyen d'un procédé d'appariement d'images, tel que celui divulgué par la demande de brevet n° 95 00246 déposée le 11 janvier 1995 par la demanderesse.

Un tel procédé d'appariement peut en particulier être mis en oeuvre entre une première image d'un territoire prise par un radar embarqué à bord d'un aéronef survolant ledit territoire, et une seconde image représentant une vue cartographique du territoire survolé, lesdites première et seconde images étant à cet effet segmentées dans une première étape dudit procédé d'appariement.

Une telle segmentation qui suppose généralement le traitement de tous les pixels de l'image nécessite souvent une durée de mise en oeuvre longue qui ne permet pas d'obtenir les résultats très rapidement, comme cela est toutefois nécessaire dans de nombreuses applications pratiques.

De plus, les méthodes de segmentation connues sont généralement fortement et négativement influencées par les bruits susceptibles d'exister sur les images, en particulier les bruits multiplicatifs existant en général sur les images réalisées par un radar à synthèse d'ouverture.

La présente invention a pour objet de remédier à ces inconvénients. Elle concerne un procédé de segmentation précis et rapide, particulièrement bien adapté aux images d'un radar à synthèse d'ouverture.

A cet effet, ledit procédé de segmentation d'une image reproduisant une scène déterminée est remarquable, selon l'invention :

- en ce que, dans une étape préliminaire :

. on recherche sur ladite scène des objets déterminés de différentes classes d'objets prédéfinies, dont au moins les trois classes formées respectivement des objets suivants : les lignes sombres, les lignes brillantes et les surfaces sombres de ladite scène, et

. pour chacune des classes d'objets pour lesquelles au moins un objet est présent sur ladite scène, on détermine des directions privilégiées qui correspondent aux directions de ladite scène présentant le plus d'objets de ladite classe, le nombre de directions privilégiées d'une classe étant limité le cas échéant à un nombre maximal prédéfini ; et

- en ce que, sur ladite image, on effectue, pour chacune des classes dont au moins un objet est présent sur la scène, une opération de segmentation spécifique qui est uniquement mise en oeuvre suivant les directions privilégiées déterminées de ladite classe, lesdites opérations de segmentation étant effectuées l'une après l'autre et chacune desdites opérations de segmentation étant effectuée en tenant compte le cas échéant des opérations précédentes de manière à ne plus traiter des éléments de l'image traités par l'une desdites opérations précédentes, chacune desdites opérations de segmentation étant destinée à extraire de l'image les objets de la classe concernée présents dans lesdites directions privilégiées correspondantes et à former sur l'image, le long des objets ainsi extraits, des primitives représentant des lignes constituées de segments de droite attenants.

Ainsi, grâce à l'invention, les diverses opérations de segmentation ne sont mises en oeuvre que dans lesdites directions privilégiées et non sur toute l'image, ce qui entraîne un gain de temps important. Ce gain de temps est de plus amélioré par la prise en compte pour chaque opération de segmentation des opérations de segmentation précédentes.

En outre, la segmentation ainsi effectuée est très précise et elle est particulièrement bien adaptée aux images d'un radar à synthèse d'ouverture en remédiant notamment aux problèmes liés auxdits bruits multiplicatifs précités.

Bien entendu, lesdites opérations de segmentation sont adaptées aux objets des classes auxquelles elles sont associées.

Aussi, selon l'invention, pour réaliser l'opération de segmentation associée à la classe des surfaces sombres, avantageusement :

a) on effectue sur toute l'image les étapes suivantes :

$\alpha$) on filtre l'image pour renforcer les modes principaux de ladite image,

β) on détermine le gradient morphologique de l'image filtrée, ledit gradient morphologique représentant le relevé des transitions les plus importantes des niveaux de gris des pixels de l'image, qui correspond aux contours des surfaces sombres, et

γ) on effectue un seuillage de ladite image de manière à ne conserver que les pixels de l'image dont le niveau de gris est supérieur à une valeur déterminée ;

b) dans chacune des directions privilégiées déterminées, on extrait les contours des surfaces sombres ; et

c) on forme des primitives le long des contours ainsi extraits, de préférence à l'aide d'une méthode de polygonalisation de distance à la corde.

Avantageusement, à l'étape α), on détermine pour chaque pixel de l'image, la valeur médiane des niveaux de gris des pixels situés dans un cercle de diamètre prédéfini autour dudit pixel et on associe audit pixel ladite valeur médiane déterminée.

En outre, de façon avantageuse, à l'étape b), pour extraire les contours des surfaces sombres dans une direction privilégiée :

α) on effectue une érosion du type connu dans ladite direction privilégiée pour ne conserver que les amas bien orientés, un amas étant constitué d'une suite de pixels connexes, une telle érosion connue étant destinée à associer, à chaque pixel de l'image dont le niveau de gris est supérieur à une valeur déterminée, une valeur de niveau de gris maximale ;

β) on détermine les axes des amas ainsi conservés ;

γ) on filtre les amas de manière à ne retenir qu'un nombre déterminé d'amas, à savoir ceux dont les sommes des niveaux de gris de tous les pixels de l'amas sont les plus élevées ; et

δ) on effectue une dilatation du type connu pour élargir les amas ainsi retenus, une telle dilatation connue étant destinée à associer, à chaque pixel de l'image dont le niveau de gris est inférieur à une valeur déterminée, une valeur de niveau de gris minimale.

De plus, selon l'invention, pour réaliser l'opération de segmentation associée à la classe des lignes sombres :

- sur toute l'image :
  a) on effectue un seuillage pour éliminer les zones brillantes de ladite image ;
- dans chacune des directions privilégiées :

  b) on met en évidence toutes les lignes sombres de l'image présentant une largeur inférieure à un nombre de pixels déterminé, en effectuant à cet effet une dilatation, puis une érosion ;

c) on effectue une érosion dans ladite direction privilégiée pour ne conserver que les amas bien orientés, un amas étant constitué d'une suite de pixels connexes ;

d) on détermine les axes des amas ainsi conservés ;

e) on filtre les amas de manière à ne retenir qu'un nombre déterminé d'amas, à savoir ceux dont les sommes des niveaux de gris de tous les pixels de l'amas sont les plus élevées ; et

f) on forme des primitives le long des amas de pixels retenus.

Finalement, pour réaliser l'opération de segmentation associée à la classe des lignes brillantes :

- sur toute l'image :
  a) on effectue un seuillage pour éliminer les zones sombres de ladite image ;
- dans chacune des directions privilégiées :

  b) on met en évidence toutes les lignes brillantes de l'image présentant une largeur inférieure à un nombre de pixels déterminé, en effectuant à cet effet une érosion, puis une dilatation ;

  c) à f) on effectue les mêmes traitements qu'aux étapes c) à f) de l'opération de segmentation précitée associée à la classe des lignes sombres.

Comme l'étape d) des deux opérations de segmentation précédentes risque de découper certains des amas traités, on effectue de préférence une dilatation des amas conservés, entre les étapes d) à e), de manière à reformer les amas découpés le cas échéant.

Dans le cas où ladite scène représente un paysage, pour rechercher dans ladite scène différents objets susceptibles d'être traités comme précisé ci-dessus, on considère avantageusement que les classes d'objets précitées comportent notamment les éléments suivants du paysage :

- les lacs, les pistes d'atterrissage et les grands cours d'eau, notamment les fleuves, pour la classe des surfaces sombres ;
- les routes, les étangs et les petits cours d'eau, notamment les rivières et les ruisseaux, pour la classe des lignes sombres ; et
- les voies ferrées et les ponts, pour la classe des lignes brillantes.

De préférence, lorsque l'image à traiter est une image réalisée par un radar à synthèse d'ouverture, les opérations de segmentation sont effectuées le cas échéant dans l'ordre suivant :

- d'abord, celle associée à la classe des surfaces sombres ;
- ensuite, celle associée à la classe des lignes sombres ; et
- enfin, celle associée à la classe des lignes brillantes.

La présente invention concerne également un dispositif pour la mise en oeuvre du procédé précité conforme à l'invention.

Selon l'invention, ledit dispositif est remarquable en ce qu'il comporte :

- une première unité de calcul susceptible de déterminer les classes d'objets présents sur la scène et les directions privilégiées associées auxdites classes d'objets ; et
- une seconde unité de calcul recevant ladite image et destinée à effectuer les opérations de segmentation associées aux différentes classes d'objets suivant lesdites directions privilégiées déterminées.

De façon avantageuse, ladite seconde unité de calcul comporte trois calculateurs destinés à mettre en oeuvre les opérations de segmentation relatives respectivement auxdites classes des surfaces sombres, des lignes sombres et des lignes brillantes.

Les figures du dessin annexé feront bien comprendre comment l'invention peut être réalisée. Sur ces figures, des références identiques désignent des éléments semblables.

La figure 1 est le schéma synoptique du dispositif conforme à l'invention.

La figure 2 illustre une image destinée à être traitée par le procédé conforme à l'invention.

La figure 3 illustre le traitement résultant d'une première étape dudit procédé.

Les figures 4 à 6 montrent les résultats de différents traitements successifs réalisés conformément à une première opération de segmentation, pour une partie de l'image de la figure 2.

La figure 7 illustre le résultat de ladite première opération de segmentation.

La figure 8 illustre le résultat d'une deuxième opération de segmentation.

La figure 9 illustre le résultat d'une troisième opération de segmentation.

La figure 10 montre le résultat du procédé conforme à l'invention, superposé à l'image initiale de la figure 2.

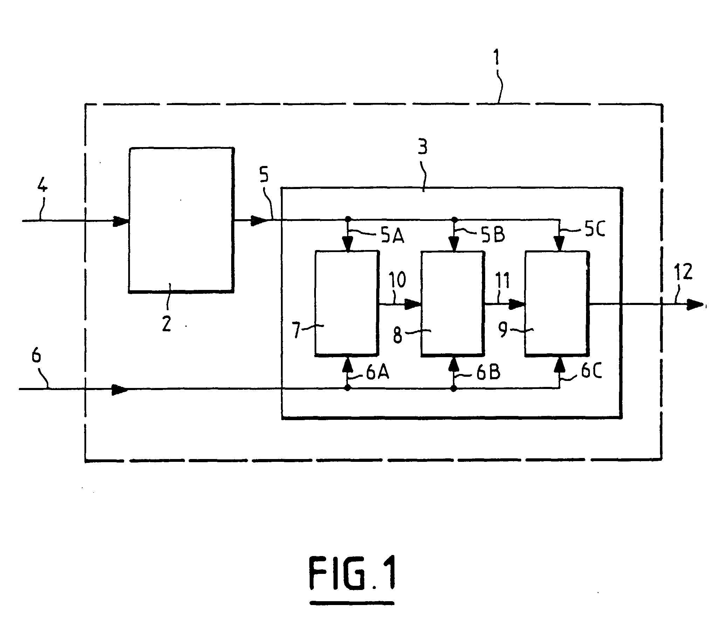

Le dispositif 1 conforme à l'invention et représenté schématiquement sur la figure 1 est destiné à effectuer la segmentation d'une image, par exemple une image infrarouge ou une image réalisée par un radar, notamment un radar à synthèse d'ouverture.

On entend par segmentation la recherche de lignes caractéristiques sur ladite image et la formation de primitives constituées de segments de droite attenants, le long des lignes caractéristiques déterminées lors de ladite recherche.

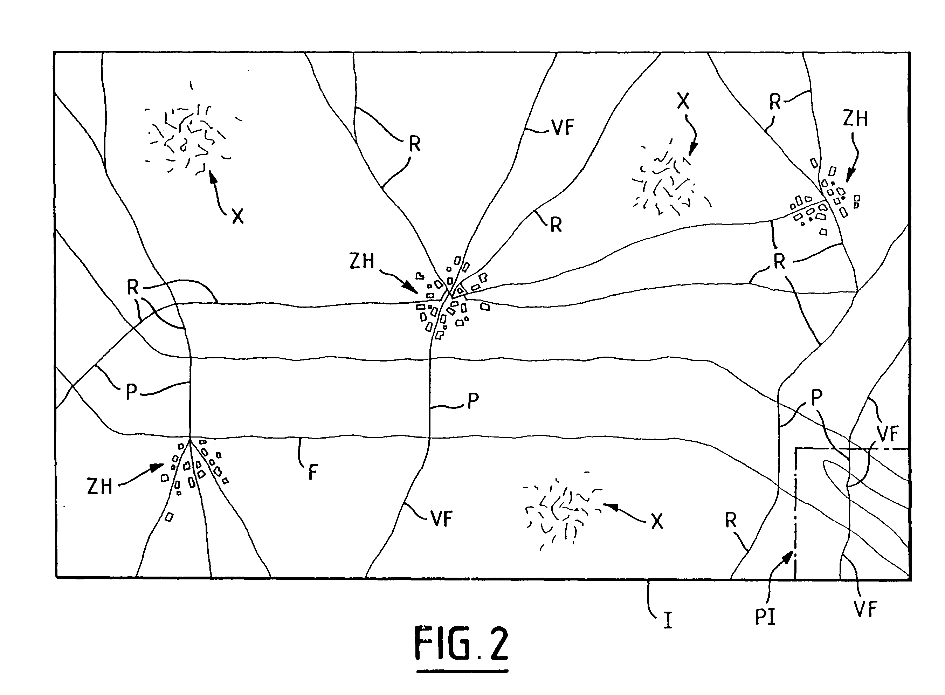

On a représenté sur la figure 2 une image I destinée à la segmentation et utilisée comme exemple ci-dessous lors de la description de l'invention. Ladite image I, dont la scène représentée correspond à un paysage, comporte :

- des routes R,
- des zones d'habitations ZH,
- des voies ferrées VF,
- un fleuve F,
- des ponts P, ainsi que
- des éléments indéfinis X, représentés localement sur la figure 2 mais susceptibles d'exister sur toute l'image, lesdits éléments indéfinis X étant considérés comme bruits parasites dans la présente invention. Ces éléments indéfinis X peuvent provenir d'objets réels détectés ou être dus à des imperfections du moyen de détection qui a réalisé ladite image I.

On sait qu'une image brute non transformée comporte généralement un nombre trop important d'informations de sorte qu'elle ne peut pas être soumise à certains traitements auxquels elle est initialement destinée, ou uniquement en mettant en oeuvre un nombre trop élevé d'opérations qui rend impossible alors, en particulier pour des raisons de durée, toute utilisation pratique.

Au contraire, une image segmentée, qui est donc ramenée à des éléments caractéristiques précisément définis, est parfaitement appropriée à certains traitements ou utilisations ultérieurs, comme par exemple un appariement d'une telle image segmentée avec une autre image également segmentée et représentant la même scène, tel que précisé ci-après.

La présente invention concerne donc un procédé permettant d'effectuer une telle segmentation, ledit procédé présentant à cet effet deux étapes principales successives précisées ci-dessous.

Selon l'invention, pour la mise en oeuvre dudit procédé, le dispositif 1 comporte deux unités de calcul 2 et 3 reliées ensemble et destinées à mettre en oeuvre chacune l'une desdites étapes principales du procédé.

Ainsi, l'unité de calcul 2, qui reçoit des informations par l'intermédiaire d'une liaison 4, à savoir la description de la scène montrée sur l'image I de la manière décrite ci-dessous, effectue dans une étape préliminaire dudit procédé les opérations suivantes :

- elle recherche sur ladite scène des objets déterminés de différentes classes d'objets prédéfinies ; et
- pour chacune des classes d'objets pour lesquelles au moins un objet est présent sur ladite scène, elle détermine des directions privilégiées correspondant aux directions de ladite scène présentant le plus d'objets de ladite classe.

Ladite unité de calcul 2 transmet les résultats obtenus à l'unité de calcul 3 par l'intermédiaire d'une liaison multiple 5.

L'unité de calcul 3, quant à elle, qui reçoit l'image I à segmenter représentée sur la figure 2 par l'intermédiaire d'une liaison multiple 6, met en oeuvre différentes opérations de segmentation précisées ci-dessous et associées chacune à l'une desdites classes d'objets.

A cet effet, ladite unité de calcul 3 comporte des calculateurs 7, 8 et 9 destinés à effectuer chacun l'une desdites opérations de segmentation.

Comme on peut le voir sur la figure 1 :

- lesdits calculateurs 7, 8 et 9 sont reliés ensemble par l'intermédiaire de liaisons 10 et 11 de sorte que les calculateurs montés en aval dans le sens de transmission des informations reçoivent les résultats des calculateurs précédents et les prennent en compte dans leurs propres traitements ;
- lesdits calculateurs 7, 8 et 9 reçoivent l'image I à segmenter respectivement par l'intermédiaire de branches 6A, 6B et 6C de la liaison multiple 6 ; et
- lesdits calculateurs 7, 8 et 9 reçoivent les résultats des traitements de ladite seconde unité de calcul 2 par l'intermédiaire respectivement de branches 5A, 5B et 5C de la liaison multiple 5.

On précise à présent les opérations précitées effectuées par lesdites unités de calcul 2 et 3.

L'unité de calcul 2 effectue donc des traitements à partir de la scène qui lui est transmise, par exemple sous forme d'une image préformée différente de l'image I mais représentant la même scène que cette image I.

Ainsi, dans le cas d'un dispositif 1 embarqué à bord d'un aéronef et destiné par exemple à certaines utilisations particulières précisées ci-dessous, ladite scène peut par exemple provenir d'une carte pré-établie du territoire à survoler par ledit aéronef, tandis que l'image I reçue par la liaison 6 peut représenter une image prise, par exemple par un radar embarqué, au moment du survol dudit territoire.

En premier lieu, ladite unité de calcul 2 recherche dans ladite scène des objets de différentes classes d'objets. Selon l'invention, au moins trois classes sont concernées, à savoir une classe A formée de surfaces sombres de ladite scène, une classe B formée de lignes sombres et une classe C formée de lignes brillantes.

Bien entendu, la présente invention n'est pas limitée à ces trois classes d'objets. On peut envisager évidemment dans le cadre de l'invention la prise en compte d'autres classes.

Dans le cas où la scène correspond à un paysage, tel que représenté sur la figure 2, selon l'invention :

- la classe A des surfaces sombres comporte au moins les grands cours d'eau, notamment les fleuves F dudit paysage, ainsi que les lacs et les pistes d'atterrissage qui n'apparaissent pas sur le paysage de la figure 2 ;
- la classe B des lignes sombres comporte au moins les routes R, ainsi que les étangs et les petits cours d'eau, notamment les rivières et les ruisseaux qui n'apparaissent pas sur ledit paysage ; et
- la classe C des lignes brillantes comporte au moins les voies ferrées VF et les ponts P.

Après avoir déterminé les objets desdites classes qui sont présents sur ladite scène, ladite unité de calcul 2 détermine le cas échéant pour chacune desdites classes des directions privilégiées. Dans le cadre de la présente invention, les directions privilégiées d'une classe correspondent aux directions de ladite scène suivant lesquelles sont orientés le plus d'objets de ladite classe, évidemment avec une certaine marge angulaire prédéfinie.

Afin de simplifier la mise en oeuvre du procédé, le nombre de directions privilégiées d'une classe est limité le cas échéant à un nombre maximal prédéfini.

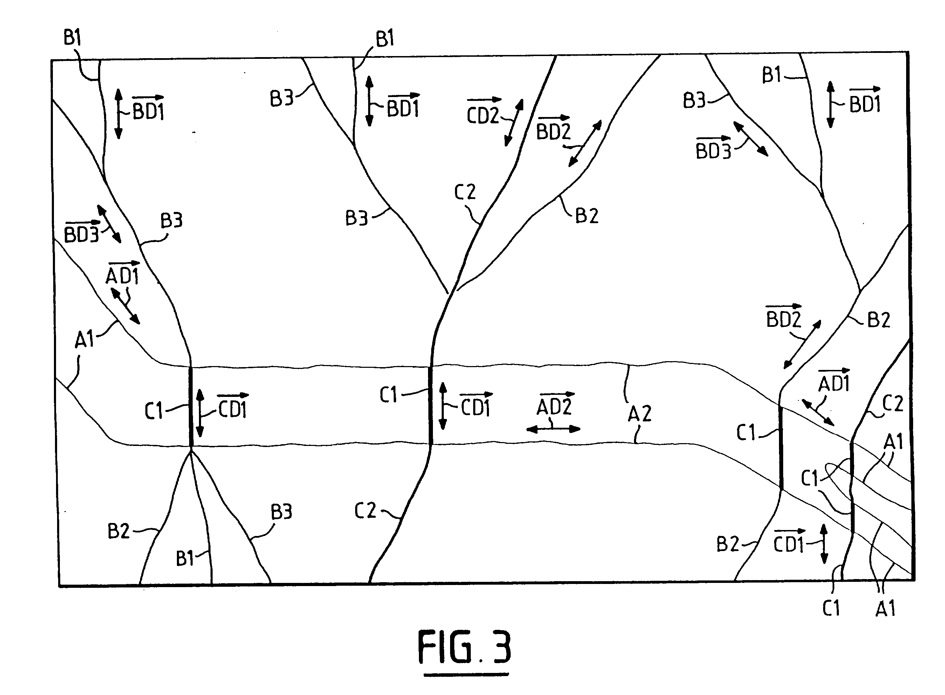

La figure 3 illustre le résultat du traitement effectué par l'unité de calcul 2.

Sur cette figure 3, on voit que :

- la classe A des surfaces sombres présente deux directions privilégiées illustrées par des flèches doubles $A\vec{D}1$ et $A\vec{D}2$ et associées respectivement à des objets A1 et A2 représentés en trait fin ;
- la classe B des lignes sombres présente trois directions privilégiées illustrées par des flèches doubles $B\vec{D}1$, $B\vec{D}2$ et $B\vec{D}3$ et associées respectivement à des objets B1, B2 et B3 représentés en trait moyen, lesdits objets B1, B2 et B3 correspondant à certaines des routes R de la figure 2 ; et
- la classe C des lignes brillantes présente deux directions privilégiées illustrées par des flèches doubles $C\vec{D}1$ et $C\vec{D}2$ et associées respectivement à des objets C1 et C2 représentés en trait fort.

On notera que lesdites directions privilégiées représentées sous forme de flèches doubles sur la figure 3 peuvent également être caractérisées, dans un mode de réalisation particulier non représenté, par des angles qui sont définis par rapport à une direction de référence.

Bien entendu, de nombreux objets de la scène traitée n'ont pas été retenus, en particulier :

- parce qu'ils existent en nombre insuffisant suivant certaines directions, tels que certaines routes R de la figure 2, ou
- parce qu'ils ne sont pas utilisés pour la mise en oeuvre du procédé conforme à l'invention, tels que les zones d'habitations ZH.

Les objets A1, A2, B1, B2, B3, C1 et C2 représentés sur la figure 3 correspondent donc aux objets sélectionnés par l'unité de calcul 2 sur la scène et transmis par la liaison multiple 5 aux calculateurs 7, 8 et 9.

Ces derniers, qui mettent en oeuvre chacun une opération de segmentation associée à l'une desdites classes d'objets A, B et C, traitent l'image I à segmenter reçue par la liaison 6 en utilisant les informations reçues concernant les objets existant sur la scène, ainsi que les directions privilégiées associées auxdits objets.

Dans le cas d'une image engendrée par un radar à synthèse d'ouverture, pour laquelle la présente invention est particulièrement bien adaptée, il est avantageux que les calculateurs 7, 8 et 9 effectuent respectivement les opérations de segmentation relatives à la classe des surfaces sombres, à celle des lignes sombres et à celle des lignes brillantes.

On explicite ci-après l'invention en utilisant cet ordre de mise en oeuvre successive des différentes opérations de segmentation. Toutefois, un autre ordre peut être mieux approprié à d'autres types d'images.

De plus, si d'autres classes d'objets que celles précisées précédemment sont à prendre en compte, on peut prévoir selon l'invention d'autres calculateurs non représentés, montés par exemple en aval desdits calculateurs 7, 8 et 9 et destinés au traitement de ces autres classes d'objets.

On décrit à présent les opérations de segmentation associées respectivement aux trois classes d'objets précitées A, B et C.

En premier lieu, l'opération de segmentation associée à la classe A des surfaces sombres et mise en oeuvre par le calculateur 7 présente les étapes suivantes :

a) sur toute l'image I reçue par la liaison 6A, on effectue les traitements suivants :

α) on filtre l'image I pour renforcer les modes principaux de ladite image ;
β) on détermine le gradient morphologique de l'image filtrée, ledit gradient morphologique représentant le relevé des transitions les plus importantes des niveaux de gris des pixels de l'image, qui correspond aux contours des surfaces sombres, ledit gradient morphologique étant obtenu par la différence entre une dilatation et une érosion précisées ci-dessous ; et
γ) on effectue un seuillage de ladite image de manière à ne conserver que les pixels de l'image dont le niveau de gris est supérieur à une valeur déterminée ;

b) dans chacune des directions privilégiées $A\vec{D}1$ et $A\vec{D}2$ déterminées par l'unité de calcul 2, on extrait les contours des surfaces sombres, tel que précisé ci-dessous ; et
c) on forme des primitives le long des contours ainsi extraits.

On notera que les procédés d'érosion et de dilatation utilisés dans la mise en oeuvre de l'invention sont du type connu et ne sont de ce fait pas explicités davantage dans la présente description.

De préférence, à l'étape α), on effectue un filtrage du type dit médian. Un tel filtrage consiste à déterminer pour chaque pixel de l'image, la valeur médiane des niveaux de gris des pixels situés dans un cercle de diamètre prédéfini autour dudit pixel et à associer audit pixel ladite valeur médiane déterminée.

Un tel filtrage est particulièrement bien adapté aux images d'un radar à synthèse d'ouverture. Il permet de réduire un éventuel bruit multiplicatif de l'image et de plus il ne dégrade pas les contours des surfaces sombres.

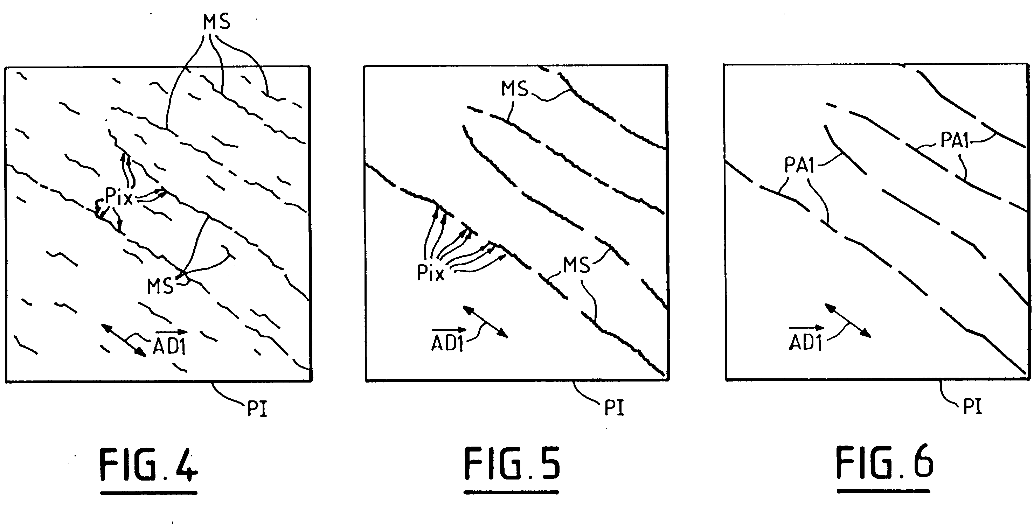

Sur les figures 4 à 6, on a représenté une partie PI de l'image I de la figure 2 soumise à différents traitements successifs destinés à permettre l'extraction dans l'étape b) précitée des contours des surfaces sombres A1 dans la direction privilégiée $A\vec{D}1$.

Selon l'invention, pour extraire les contours des surfaces sombres dans une direction privilégiée $A\vec{D}1$ :

α) on effectue une érosion dans ladite direction privilégiée $A\vec{D}1$ pour ne conserver que les amas MS bien orientés et d'une longueur supérieure à une longueur déterminée, un amas MS étant constitué d'une suite de pixels connexes Pix. Le résultat de cette érosion est représenté sur la figure 4 pour la partie PI de l'image I ;
β) on détermine les axes des amas MS ainsi conservés ;
γ) on filtre les amas MS de manière à ne retenir qu'un nombre déterminé d'amas, à savoir ceux dont les sommes des niveaux de gris de tous les pixels de l'amas sont les plus élevées ; et
δ) on effectue une dilatation pour élargir les amas ainsi retenus, tel que représenté sur la figure 5.

Puis, comme précisé précédemment, on forme des primitives PA1 constituées de segments de droite attenants le long des contours extraits précédemment, tel que représenté sur la figure 6 pour la partie d'image PI.

De préférence, lesdites primitives PA1 sont formées à l'aide d'une méthode de polygonalisation de distance à la corde.

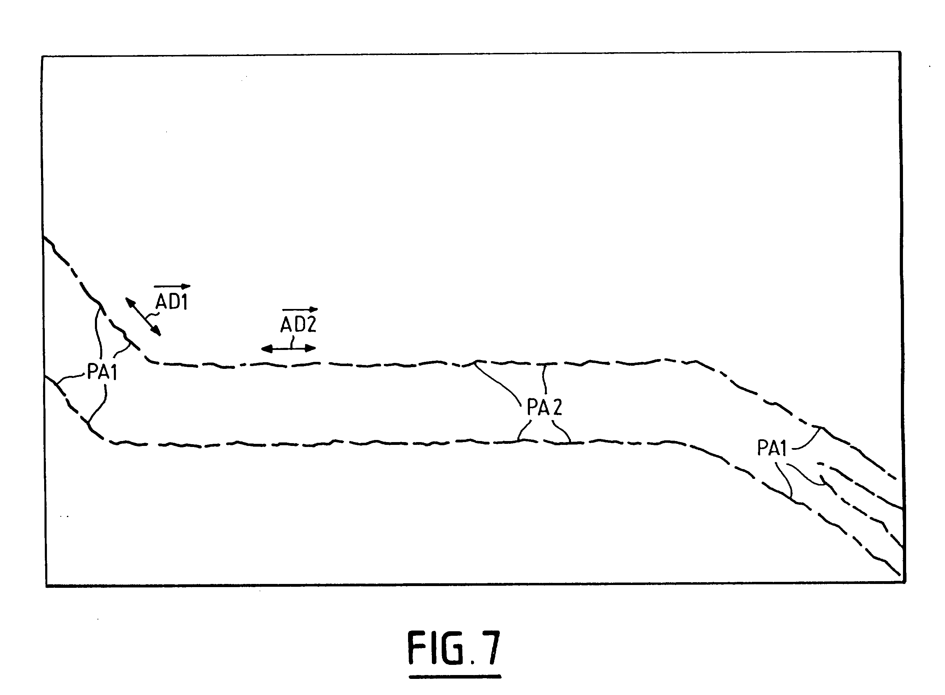

En outre, on a représenté sur la figure 7 le résultat de l'opération de segmentation associée à la classe A des surfaces sombres pour toute l'image I, c'est-à-dire les primitives PA1 et PA2 formées le long des objets A1 et A2 de la figure 3.

On décrit à présent l'opération de segmentation associée à la classe B des lignes sombres et mise en oeuvre par le calculateur 8.

Selon l'invention, pour réaliser cette opération de segmentation, on effectue successivement les traitements suivants :

- sur toute l'image I :

a) on effectue un seuillage pour éliminer les zones brillantes de ladite image, puisque le but de la présente opération de segmentation est de rechercher des lignes sombres sur un fond gris, et non de mettre en évidence des différences de niveaux de gris dues aux zones brillantes comme précédemment ;

- dans chacune des directions privilégiées $\vec{BD}1$, $\vec{BD}2$ et $\vec{BD}3$ :

b) on met en évidence toutes les lignes sombres de l'image présentant une largeur inférieure à un nombre de pixels déterminé, en effectuant à cet effet une dilatation, puis une érosion ;

c) on effectue une érosion dans ladite direction privilégiée $\vec{BD}1$, $\vec{BD}2$ ou $\vec{BD}3$ pour ne conserver que les amas de pixels bien orientés ;

d) on détermine les axes des amas ainsi conservés, lesdits amas étant susceptibles d'être découpés au cours de cette étape ;

d') on effectue une dilatation pour reformer les amas découpés, le cas échéant, à l'étape d) ;

e) on filtre les amas de manière à ne retenir qu'un nombre déterminé d'amas, à savoir ceux dont les sommes des niveaux de gris de tous les pixels de l'amas sont les plus élevées ; et

f) on forme des primitives PB1, PB2 et PB3 le long des amas de pixels retenus, de préférence à partir d'une approximation polynomiale.

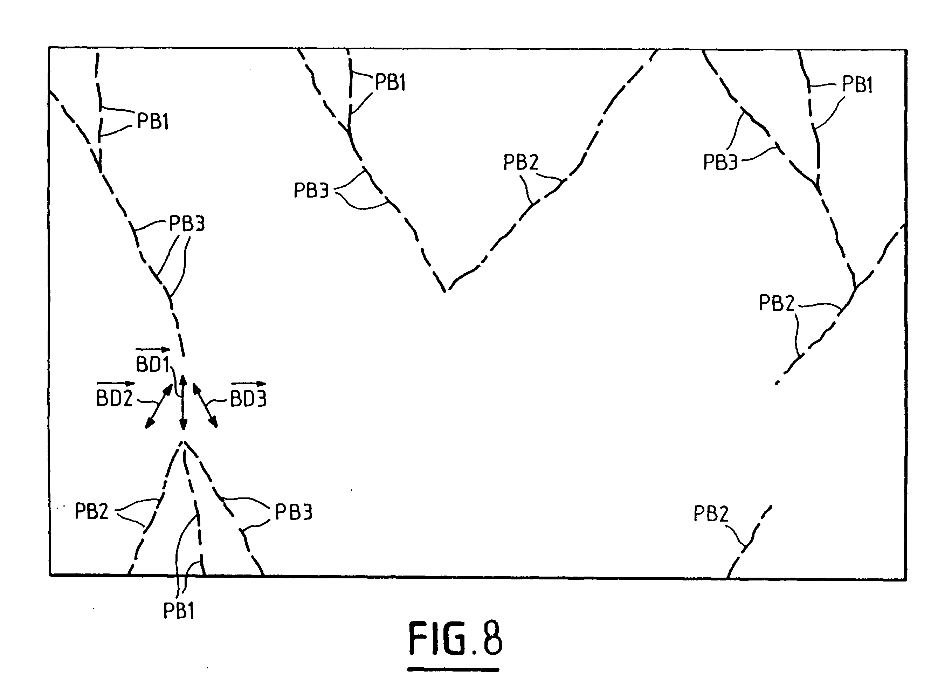

La figure 8 illustre le résultat de l'opération de segmentation explicitée ci-dessus et associée à la classe B des lignes sombres, les primitives PB1, PB2 et PB3 étant formées le long des objets B1, B2 et B3 de la figure 3.

Le résultat de cette opération de segmentation est transmise du calculateur 8 au calculateur 9 qui en tient compte lors de la mise en oeuvre de l'opération de segmentation associée à la classe C des lignes brillantes décrite à présent.

Selon l'invention, pour réaliser cette dernière opération de segmentation, on effectue successivement les traitements suivants :

- sur toute l'image I :

a) on effectue un seuillage pour éliminer les zones sombres de ladite image ;

- dans chacune des directions privilégiées correspondantes $\vec{CD}1$ et $\vec{CD}2$ :

b) on met en évidence toutes les lignes brillantes de l'image présentant une largeur inférieure à un nombre de pixels déterminé, en effectuant à cet effet une érosion, puis une dilatation ;

c) à f) on effectue les mêmes traitements que pour les étapes c) à f) de l'opération de segmentation précitée associée à la classe B.

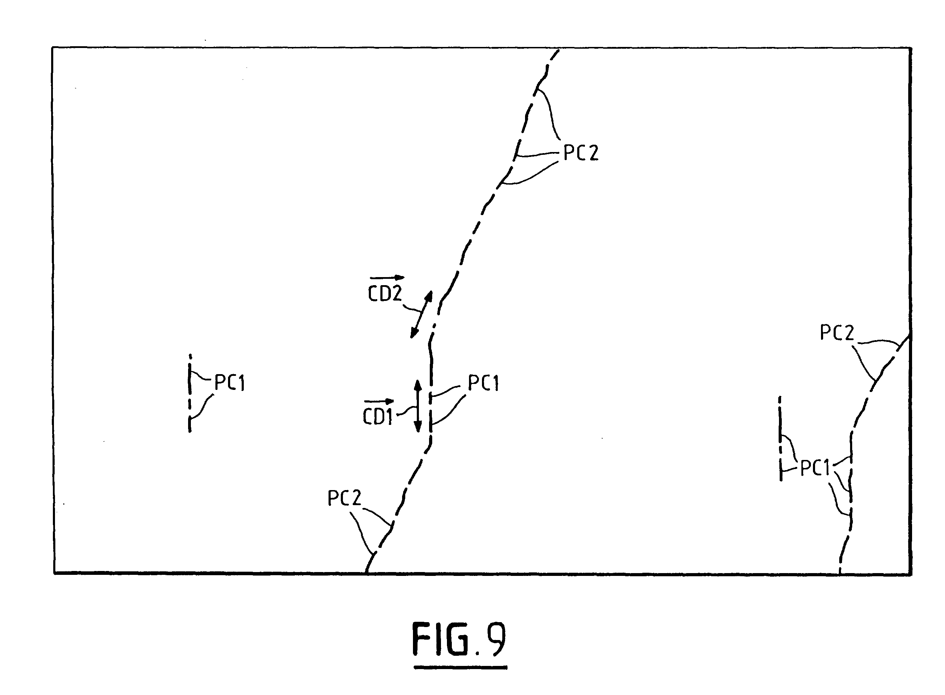

Les primitives PC1 et PC2, résultant de l'opération de segmentation associée à la classe C et décrite en dernier, sont représentées sur la figure 9.

Les résultats obtenus par le traitement de l'image I au moyen des calculateurs 7, 8 et 9 sont finalement regroupés ensemble et cet ensemble constitue le résultat de la segmentation effectuée par le dispositif 1 conforme à l'invention. Ce dernier peut transmettre ce résultat par l'intermédiaire d'une liaison 12 à un dispositif utilisateur non représenté.

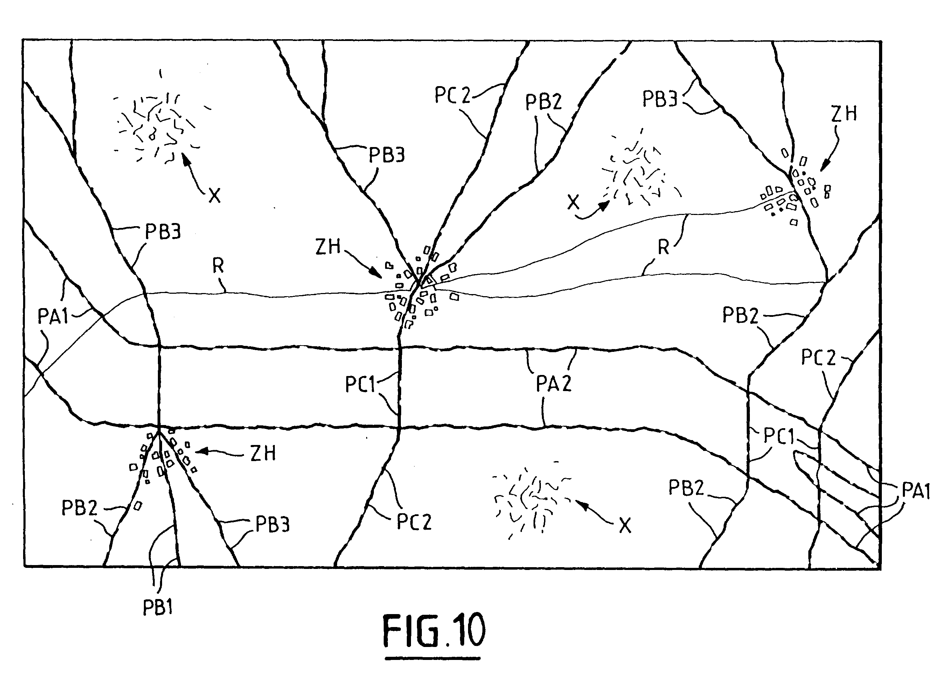

Afin de bien mettre en évidence ce résultat, on a superposé sur la figure 10 à l'image I initiale de la figure 2, représentée en trait fin, les primitives des figures 7 à 9 obtenues par le procédé de segmentation, représentées en trait fort.

Pour faciliter la mise en oeuvre de l'invention, on peut utiliser un support initialement vide sur lequel on enregistre successivement les résultats desdites opérations de segmentation, ledit support étant transmis du calculateur 7 au calculateur 8, puis au calculateur 9, ces derniers calculateurs 8 et 9 prenant en compte les informations enregistrées sur ledit support dans leur propre traitement de manière à éviter de traiter plusieurs fois les mêmes éléments de l'image.

Le procédé conforme à l'invention précisé précédemment à partir d'un exemple de réalisation avantageux comporte de nombreux avantages, en particulier :

- la durée de mise en oeuvre est courte,
- les résultats sont très précis, et
- le procédé est peu influencé par les bruits susceptibles de rendre l'image peu claire.

De plus, l'image obtenue par cette segmentation est particulièrement bien adaptée au procédé d'appariement d'images divulgué par la demande de brevet précitée n° 95 00246 de la demanderesse.

Dans un mode de réalisation particulier permettant une mise en oeuvre conjointe du présent procédé de segmentation et dudit procédé d'appariement et destiné par exemple à l'appariement d'un modèle représentant une vue (ou une image) cartographique d'un territoire à survoler par un aéronef et d'une image correspondant à une prise de vue dudit territoire, réalisée lors de son survol :

- on transmet audit module de calcul 2 par la liaison 4 ledit modèle représentant la scène à traiter ; et
- on transmet audit module de calcul 3 par la liaison 6 ladite image réalisée en vol.

Dans ce cas, le module de calcul 2 effectue de préférence ses traitements au sol et on embarque à bord de l'aéronef uniquement ledit module de calcul 3 auquel on associe une mémoire non représentée comportant le résultat desdits traitements effectués au sol.

## Revendications

1. Procédé de segmentation d'une image (I) reproduisant une scène déterminée, caractérisé :

   - en ce que, dans une étape préliminaire :

     . on recherche sur ladite scène des objets déterminés (A1, A2, B1, B2, B3, C1, C2) de différentes classes d'objets prédéfinies, dont au moins les trois classes formées respectivement des objets suivants : les lignes sombres, les lignes brillantes et les surfaces sombres de ladite scène, et

     . pour chacune des classes d'objets pour lesquelles au moins un objet est présent sur ladite scène, on détermine des directions privilégiées ($\vec{AD}1$, $\vec{AD}2$, $\vec{BD}1$, $\vec{BD}2$, $\vec{BD}3$, $\vec{CD}1$, $\vec{CD}2$) qui correspondent aux directions de ladite scène présentant le plus d'objets de ladite classe, le nombre de directions privilégiées d'une classe étant limité le cas échéant à un nombre maximal prédéfini ; et

   - en ce que, sur ladite image, on effectue, pour chacune des classes dont au moins un objet est présent sur la scène, une opération de segmentation spécifique qui est uniquement mise en oeuvre suivant les directions privilégiées déterminées de ladite classe, lesdites opérations de segmentation étant effectuées l'une après l'autre et chacune desdites opérations de segmentation étant effectuée en tenant compte le cas échéant des opérations précédentes de manière à ne plus traiter des éléments de l'image traités par l'une desdites opérations précédentes, chacune desdites opérations de segmentation étant destinée à extraire de l'image les objets de la classe concernée présents dans lesdites directions privilégiées correspondantes et à former sur l'image, le long des objets ainsi extraits, des primitives (PA1, PA2, PB1, PB2, PB3, PC1, PC2) représentant des lignes constituées de segments de droite attenants.

2. Procédé selon la revendication 1, caractérisé en ce que, pour réaliser l'opération de segmentation associée à la classe des surfaces sombres (A1, A2) :

   a) on effectue sur toute l'image (I) les étapes suivantes :

     α) on filtre l'image pour renforcer les modes principaux de ladite image,

     β) on détermine le gradient morphologique de l'image filtrée, ledit gradient morphologique représentant le relevé des transitions les plus importantes des niveaux de gris des pixels de l'image, qui correspond aux contours des surfaces sombres, et

     γ) on effectue un seuillage de ladite image de manière à ne conserver que les pixels de l'image dont le niveau de gris est supérieur à une valeur déterminée ;

   b) dans chacune des directions privilégiées déterminées ($\vec{AD}1$, $\vec{AD}2$), on extrait les contours des surfaces sombres ; et

   c) on forme des primitives (PA1, PA2) le long des contours ainsi extraits.

3. Procédé selon la revendication 2, caractérisé en ce que, à l'étape α), on détermine pour chaque pixel de l'image, la valeur médiane des niveaux de gris des pixels situés dans un cercle de diamètre prédéfini autour dudit pixel et on associe audit pixel ladite valeur médiane déterminée.

4. Procédé selon l'une des revendications 2 ou 3, caractérisé en ce que, à l'étape b), pour extraire les contours des surfaces sombres dans une direction privilégiée ($\vec{AD}1$, $\vec{AD}2$) :

   α) on effectue une érosion dans ladite direction privilégiée pour ne conserver que les amas (MS) bien orientés, un amas (MS) étant constitué d'une suite de pixels connexes (Pix) ;

   β) on détermine les axes des amas ainsi conservés ;

   γ) on filtre les amas de manière à ne retenir qu'un nombre déterminé d'amas, à savoir ceux dont les sommes des niveaux de gris de tous les pixels de l'amas sont les plus élevées ; et

   δ) on effectue une dilatation pour élargir les amas ainsi retenus.

5. Procédé selon l'une des revendications 2 à 4, caractérisé en ce que, à l'étape c), on forme les primitives (PA1, PA2) à l'aide d'une méthode de polygonalisation de distance à la corde.

6. Procédé selon l'une quelconque des revendications précédentes, caractérisé en ce que, pour réaliser l'opération de segmentation associée à la classe des lignes sombres (B1, B2, B3) :

   - sur toute l'image (I) :
   a) on effectue un seuillage pour éliminer les zones brillantes de ladite image ;

   - dans chacune des directions privilégiées ($\vec{BD}1$, $\vec{BD}2$, $\vec{BD}3$) :

b) on met en évidence toutes les lignes sombres de l'image présentant une largeur inférieure à un nombre de pixels déterminé, en effectuant à cet effet une dilatation, puis une érosion ;

c) on effectue une érosion dans ladite direction privilégiée pour ne conserver que les amas bien orientés, un amas étant constitué d'une suite de pixels connexes ;

d) on détermine les axes des amas ainsi conservés ;

e) on filtre les amas de manière à ne retenir qu'un nombre déterminé d'amas, à savoir ceux dont les sommes des niveaux de gris de tous les pixels de l'amas sont les plus élevées ; et

f) on forme des primitives (PB1, PB2, PB3) le long des amas de pixels retenus.

7. Procédé selon l'une quelconque des revendications précédentes,
caractérisé en ce que, pour réaliser l'opération de segmentation associée à la classe des lignes brillantes (C1, C2) :

-  sur toute l'image (I) :
   a) on effectue un seuillage pour éliminer les zones sombres de ladite image ;
-  dans chacune des directions privilégiées ($\vec{DC}1$, $\vec{DC}2$) :

   b) on met en évidence toutes les lignes brillantes de l'image présentant une largeur inférieure à un nombre de pixels déterminé, en effectuant à cet effet une érosion, puis une dilatation ;

   c) on effectue une érosion dans ladite direction privilégiée pour ne conserver que les amas bien orientés, un amas étant constitué d'une suite de pixels connexes ;

   d) on détermine les axes des amas ainsi conservés ;

   e) on filtre les amas de manière à ne retenir qu'un nombre déterminé d'amas, à savoir ceux dont les sommes des niveaux de gris de tous les pixels de l'amas sont les plus élevées ; et

   f) on forme des primitives (PC1, PC2) le long des amas de pixels retenus.

8. Procédé selon l'une des revendications 6 ou 7,
caractérisé en ce que, entre les étapes d) et e), on effectue une dilatation des amas conservés.

9. Procédé selon l'une quelconque des revendications précédentes, la scène représentant un paysage,
caractérisé en ce que la classe des surfaces sombres (A1, A2) comporte au moins les éléments suivants : les lacs, les pistes d'atterrissage et les grands cours d'eau, notamment les fleuves (F), dudit paysage.

10. Procédé selon l'une quelconque des revendications précédentes, la scène représentant un paysage,
caractérisé en ce que la classe des lignes sombres (B1, B2, B3) comporte au moins les éléments suivants : les routes (R), les étangs et les petits cours d'eau, notamment les rivières et les ruisseaux, dudit paysage.

11. Procédé selon l'une quelconque des revendications précédentes, la scène représentant un paysage,
caractérisé en ce que la classe des lignes brillantes (C1, C2) comporte au moins les éléments suivants : les voies ferrées (VF) et les ponts (P), dudit paysage.

12. Procédé selon l'une quelconque des revendications précédentes, l'image étant une image réalisée par un radar à synthèse d'ouverture,
caractérisé en ce que les opérations de segmentation sont effectuées le cas échéant dans l'ordre suivant :

-  d'abord, celle associée à la classe des surfaces sombres ;
-  ensuite, celle associée à la classe des lignes sombres ; et
-  enfin, celle associée à la classe des lignes brillantes.

13. Dispositif pour la mise en oeuvre du procédé spécifié sous l'une quelconque des revendications 1 à 12,
caractérisé en ce qu'il comporte :

-  une première unité de calcul (2) susceptible de déterminer les classes d'objets présents sur la scène et les directions privilégiées associées auxdites classes d'objets ; et
-  une seconde unité de calcul (3) recevant ladite image et destinée à effectuer les opérations de segmentation associées aux différentes classes d'objets suivant lesdites directions privilégiées déterminées.

14. Dispositif selon la revendication 13,
caractérisé en ce que ladite seconde unité de calcul (3) comporte trois calculateurs (7, 8, 9) destinés à mettre en oeuvre les opérations de segmentation relatives respectivement auxdites classes des surfaces sombres, des lignes sombres et des lignes brillantes.

# FIG.1

FIG. 2

FIG. 3

EP 0 729 116 A1

EP 0 729 116 A1

MS

Pix

MS

$\overrightarrow{AD1}$

PI

**FIG.4**

MS

Pix

MS

$\overrightarrow{AD1}$

PI

**FIG.5**

PA1

PA1

$\overrightarrow{AD1}$

PI

**FIG.6**

EP 0 729 116 A1

FIG. 7

## FIG.8

EP 0 729 116 A1

FIG.9

**FIG.10**

Office européen
des brevets

**RAPPORT DE RECHERCHE EUROPEENNE**

Numero de la demande
EP 96 40 0336

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.CL6) |
|---|---|---|---|
| X | US-A-5 335 298 (HEVENOR ET AL) <br> * colonne 2, ligne 63 - colonne 3, ligne 64 * <br> * colonne 4, ligne 5 - ligne 46 * <br> * colonne 4, ligne 55 - colonne 5, ligne 7 * <br> * colonne 5, ligne 44 - ligne 67 * <br> * colonne 8, ligne 24 - ligne 47 * <br> * colonne 9, ligne 20 - ligne 60 * <br> * colonne 9, ligne 63 - colonne 10, ligne 14 * <br> * colonne 16, ligne 15 - ligne 21 * <br> --- | 1-14 | G06T5/00 |
| A | PATTERN RECOGNITION LETTERS, <br> vol. 12, no. 12, Décembre 1991, AMSTERDAM, NL, <br> pages 765-770, XP000244671 <br> S K PARUI ET AL.: " A Parallel Algorithm for Detection of Linear Structures in Satellite Images." <br> * alinéa 2; figures 1,6-11 * <br> --- | 1-14 | |
| A | IEEE TRANSACTIONS ON GEOSCIENCE AND REMOTE SENSING, <br> vol. 28, no. 4, Juillet 1990, NEW YORK, US, <br> pages 662-668, XP000148287 <br> JONG-SEN LEE & IGOR JURKEVICH: "Coastline Detection and Tracing in SAR Images." <br> * alinéa IV - alinéa V; figures 3-5 * <br> --- <br><br> -/-- | 1-14 | **DOMAINES TECHNIQUES RECHERCHES (Int.Cl.6)** <br><br> G06T |

Le présent rapport a été établi pour toutes les revendications

| Lieu de la recherche | Date d'achèvement de la recherche | Examinateur |
|---|---|---|
| LA HAYE | 10 Mai 1996 | Gonzalez Ordonez, O |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................................
& : membre de la même famille, document correspondant

EPO FORM 1503 03.82 (P04C02)

EP 0 729 116 A1

**Office européen des brevets**

**RAPPORT DE RECHERCHE EUROPEENNE**

Numero de la demande

EP 96 40 0336

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | PROCEEDINGS:EUSPICO-90: SIGNAL PROCESSING V. THEORIES AND APPLICATIONS, vol. 3, 18 Septembre 1990, BARCELINA, SPAIN, pages 1671-1674, XP000365884 VENKATERWAR V & CHELLAPPA R: "Extraction of Straight Lines in Aerial Images." * alinéa 2 - alinéa 4 * | 1-14 | |
| A | US-A-5 142 592 (MOLER) * colonne 4, ligne 65 - colonne 5, ligne 64 * * abrégé * | 1-14 | |

DOMAINES TECHNIQUES RECHERCHES (Int.Cl.6)

Le présent rapport a été établi pour toutes les revendications

| Lieu de la recherche | Date d'achèvement de la recherche | Examinateur |
|---|---|---|
| LA HAYE | 10 Mai 1996 | Gonzalez Ordonez, O |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

19